# EUROPÄISCHE PATENTSCHRIFT

(11) **EP 0 864 950 B1**
(45) Veröffentlichungstag und Bekanntmachung des Hinweises auf die Patenterteilung: **04.08.1999**
(21) Anmeldenummer: 98102470.6
(22) Anmeldetag: 13.02.1998
(51) Int. Cl.: G05B 19/042

(54) **Schaltschrank-Überwachungsanlage**
Installation for monitoring a switching cabinet
Système de surveillance pour une armoire de distribution

(30) Priorität: 12.03.1997 DE 19710016
(43) Veröffentlichungstag der Anmeldung: 16.09.1998
(73) Patentinhaber: Rittal-Werk Rudolf Loh GmbH & Co. KG, 35745 Herborn (DE)
(72) Erfinder: Hain, Markus, 35684 Dillenburg (DE); Kreiling, Jörg, 35444 Biebertal (DE)
(74) Vertreter: Fleck, Hermann-Josef, Dr.-Ing.

(56) Entgegenhaltungen:
- DE-A- 4 330 922
- US-A- 4 833 708

## Beschreibung

Die Erfindung bezieht sich auf eine Schaltschrank-Überwachungsanlage, bei der jede Schaltschrank eine Steuereinrichtung für Schrankeinbaueinheiten und/oder Schrankanbaueinheiten und mindestens einen Serveraufweist.

In Styppa Heinrich, Schaltschrank-Klimatisierung, 1992, Verlag Moderne Industrie, Landsberg/Lech, Seite 35 bis 37 ist eine Schaltschrank-Überwachungsanlage mit Mikrocornputer-Regelung für die Funktionsfähigkeit eines Kühlgeräts angegeben. Die Mikrocomputer-Regelung ist in eine Überwachungsanlage, wie zentrale Leittechnik oder Anzeige- und Informationssysteme integrierbar. Diese bekannte Überwachungsanlage ist speziell auf die Überwachung eines Kühlgerätes ausgerichtet. Zur Überwachung anderer Schrankeinbaueinheiten und/oder Schrankanbaueinheiten sind in dieser Druckschrift keine Erläuterungen gegeben.

Der Erfindung liegt die Aufgabe zugrunde, eine Schaltschrank-Überwachungsanlage bereitzustellen, die eine vielfältige Funktionsüberwachung und Funktionssteuerung einschließlich im Schaltschrank eingebauter Server ermöglicht.

Diese Aufgabe wird mit den Merkmalen des Anspruchs 1 gelöst. Hiernach ist also jede Steuereinrichtung und jeder Server über ein Netz mit einem Leitrechner verbunden. Die Steuereinrichtungen sind über zusätzliche Verbindungen mit dem Leitrechner und über mindestens einen Anschluß mit den Servern gekoppelt. Bei Ausfall des Netzes ist der Datenaustausch zwischen den Steuereinrichtungen und dem Leitrechner über die zusätzliche Verbindung herstellbar. Auf diese Weise kann bei Netzausfall mittels des Leitrechners über die Steuereinrichtung auf den Server, dessen Netz ausgefallen ist, Einfluß genommen werden. In einem Schaltschrank sind in der Regel mehrere Server untergebracht, die alle an eine Steuereinrichtung oder erforderlichenfalls, wenn viele Funktionen überwacht und gesteuert werden müssen, an mehrere Steuereinrichtungen (aber höchstens eine pro Server) angeschlossen sind. In der Regel wird mit einem jeweiligen Server ein zugehöriges Netz gebildet. Mehrere Netze können miteinander beispielsweise über eine Gateway gekoppelt sein. Mit dem Leitrechner lassen sich mehrere derartiger Netze bzw. auch derartig ausgerüstete Schaltschränke überwachen und steuern.

Verschiedene Möglichkeiten für die neben dem Netz vorgesehenen Verbindungen bestehen darin, daß die zusätzlichen Verbindungen eine Busverbindung, eine ISDN-Verbindung, eine Telefonleitung oder serielle Datenübertragungsleitungen aufweisen. Der Aufwand für die Busverbindung kann dabei gering gehalten werden, da die Leitrechner lediglich mit den Steuereinrichtungen verbunden sind und aufwendige Datenübertragungen zwischen den Arbeitsplatzrechnern und dem Server nicht über die zusätzlichen Verbindungen ablaufen. Bei weniger großen Entfernungen zwischen Leitrechner und den einzelnen Steuereinrichtungen eignen sich auch die seriellen Datenübertragungsleitungen (RS 232 bzw. V 24) da derartige Schnittstellen standardisiert sind. Eine ISDN-Verbindung bzw. Telefonleitung eignet sich zum Überbrücken weiterer Entfernungen. Dabei ist die Verdrahtung relativ einfach.

Ein vorteilhafter Aufbau besteht darin, daß der Leitrechner einen Ausfall des Netzes mittels einer Erkennungsstufe feststellt und über die zusätzliche Verbindung an die Steuereinrichtung, die an den zu dem betreffenden Netzwerk gehörenden Server angeschlossen ist, ein Netzausfallsignal abgibt und daß der Server mittels der Steuereinrichtung bei Empfang des Netzausfallsignals über den Anschluß oder die Anschlüsse rücksetzbar oder abschaltbar und wieder einschaltbar ist. Mit diesen steuerungstechnisch wenig aufwendigen Maßnahmen können von dem zentralen Leitrechner aus die überwiegende Zahl von Netzwerkausfällen behoben werden.

Dabei bestehen einfache Steuerungselemente zur Einflußnahme von der Steuereinrichtung auf den Server darin, daß die Anschlüsse einen Optokoppler oder ein Relais aufweisen. Dabei kann in einfacher Weise vorgesehen sein, daß ein Rücksetztaster des Servers mittels des Anschlusses parallel überbrückbar ist, bzw. daß die Versorgungs-Netzanschaltung der Server über die Steuereinrichtung geführt und in dieser abschaltbar und einschaltbar ist.

Mit den Maßnahmen des Hauptanspruchs und der Unteransprüche kann somit von einem zentralen Bedienplatz aus bei Ausfall des Netzes schnell und einfach ein Wiederanlauf erreicht werden.

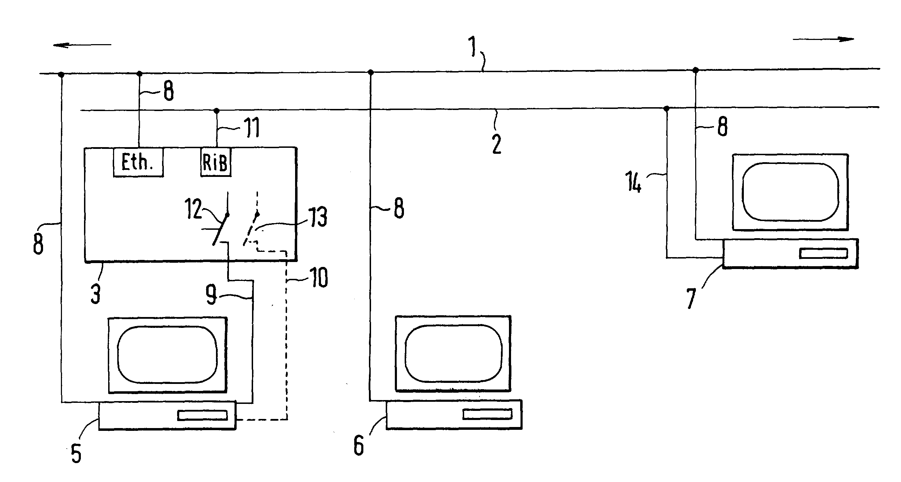

Die Erfindung wird nachfolgend anhand eines Ausführungsbeispiels unter Bezugnahme auf die Zeichnung näher erläutert.

Die Fig. zeigt schematisch eine Schaltschrank-Überwachungsanlage, bei der an einem Netz 1 ein Server 5, eine Steuereinrichtung 3, ein Arbeitsplatzrechner 6 und ein Leitrechner 7 über jeweilige Netzwerkanschlüsse 8 angekoppelt sind.

An einem Netz 1 mit einem Server 5 sind in der Regel mehrere Arbeitsplatzrechner 6 angeschlossen. In einem Schaltschrank sind mindestens eine Steuereinrichtung 3 für die Überwachung und Steuerung mehrerer oder vieler Einbaueinheiten und Anbaueinheiten sowie mehrere, zum Beispiel vier Server 5 untergebracht. Die Steuereinrichtung 3 übernimmt dabei auch eine Überwachungs- und Steuerungsfunktion für die Server 5. Die Steuereinrichtung 3 gibt bei funktionsbereitem Netz 1 an den Leitrechner 7 Überwachungsdaten ab und kann von diesem auch Steuerungsdaten empfangen.

Zusätzlich zu dem vorhandenen Netz 1 sind die Steuereinrichtungen 3 über eine Verbindung 2 an den Leitrechner 7 angekoppelt. Zudem ist der Server 5 über mindestens einen Anschluß mit der Steuereinrichtung 3 gekoppelt. Diese Anschlüsse sind vorliegend als Rücksetzanschluß 9 und Versorgungs-Netzanschaltung 10 ausgebildet. Der Rücksetzanschluß 9 weist ein Rücksetzelement, z.B. einen Rücksetztaster 12, ein Relais oder einen Optokoppler auf, mit dem ein Rücksetzsignal an den Server 5 abgegeben werden kann. Dazu kann ein an dem Server vorhandener Rücksetztaster parallel überbrückt werden. In der Versorgungs-Netzanschaltung ist ein Schaltelement 13 zum Einschalten bzw. Abschalten des Versorgungsnetzes vorgesehen.

Wird in einer Erkennungsstufe des Leitrechners 7 ein Ausfall des Netzes 1 festgestellt, so gibt dieser ein Netzausfallsignal über eine Anschlußleitung 14, die zusätzliche Verbindung 2 und eine weitere Anschlußleitung 11 an die Steuereinrichtung 3 und spricht die Steuereinrichtung 3 mit einer Steuerinformation zur Reaktion auf den Ausfall des Netzes 1 an. Die Steuereinrichtung 3 gibt dann ein Reset-Signal an den Server 5, so daß der Netzbetrieb über das Netz 1 wieder aufgenommen wird. Alternativ kann mittels der Steuereinrichtung 3 auch das Versorgungsnetz des Servers 5 abgeschaltet und nach einer gewissen Zeit wieder eingeschaltet werden, um den Netzbetrieb wieder herzustellen. Als Rücksetzelement bzw. Schaltelement 13 kommen z.B. auch ein Relais oder ein Optokoppler zur Abgabe eines entsprechenden Signals in Frage.

In den meisten Fällen kann somit über die zusätzliche Verbindung 2 von dem zentralen Bedienplatz des Leitrechners 7 aus über die Steuereinrichtung 3 der Netzbetrieb wieder hergestellt werden. Ist dies nicht möglich, so kann die Bedienperson am Leitrechner mittels einer entsprechenden Information an der dort vorhandenen Anzeigeeinrichtung und evtl. mittels Diagnosedaten auf den nicht behobenen Fehlerzustand aufmerksam gemacht werden und dann den Fehlerzustand vor Ort beheben.

## Patentansprüche

1. Schaltschrank-Überwachungsanlage, bei der jeder Schaltschrank mindestens eine Steuereinrichtung (3) für Schrankeinbaueinheiten und/oder Schrankanbaueinheiten und mindestens einen Server (5) aufweist, bei der jede Steuereinrichtung (3) und jeder Server (5) über ein Netz (1) mit einem Leitrechner verbunden sind, bei der die Steuereinrichtungen (3) über zusätzliche Verbindungen (2,11,14) mit dem Leitrechner (7) und über mindestens einen Anschluß (9,10) mit den Servern (5) gekoppelt sind und bei der bei Ausfall des Netzes (1) der Datenaustausch zwischen den Steuereinrichtungen (3) und dem Leitrechner (7) über die zusätzliche Verbindung (2,11,14) herstellbar ist.

2. Schaltschrank-Überwachungsanlage nach Anspruch 1,
dadurch gekennzeichnet,
daß die zusätzlichen Verbindungen (2,11,14) eine Busverbindung (2), eine ISDN-Verbindung, eine Telefonleitung oder serielle Datenübertragungsleitungen aufweisen.

3. Schaltschrank-Überwachungsanlage nach Anspruch 1 oder 2,
dadurch gekennzeichnet,
daß der Leitrechner (7) einen Ausfall des Netzes (1) mittels einer Erkennungsstufe feststellt und über die zusätzliche Verbindung (2,11,14) an die Steuereinrichtung (3), die an den zu dem betreffenden Netzwerk (1) gehörenden Server (5) angeschlossen ist, ein Netzausfallsignal abgibt und daß der Server (5) mittels der Steuereinrichtung (3) bei Empfang des Netzausfallsignals über mindestens einen Anschluß (9,10) rücksetzbar oder abschaltbar und wieder einschaltbar ist.

4. Schaltschrank-Überwachungsanlage nach Anspruch 3,
dadurch gekennzeichnet,
daß die Anschlüsse (9,10) einen Optokoppler oder ein Relais aufweisen.

5. Schaltschrank-Überwachungsanlage nach Anspruch 3 oder 4,
dadurch gekennzeichnet,
daß ein Rücksetztaster des Servers (5) mittels des Anschlusses (9) parallel überbrückbar ist.

6. Schaltschrank-Überwachungsanlage nach Anspruch 3 oder 4,
dadurch gekennzeichnet,
daß die Versorgungs-Netzanschaltung der Server (5) über die Steuereinrichtung (3) geführt und in dieser abschaltbar und einschaltbar ist.

## Claims

1. Switchgear cabinet monitoring system, wherein each switchgear cabinet includes at least one control arrangement (3) for controlling cabinet installation units and/or cabinet attachment units and at least one server (5), wherein each control arrangement (3) and each server (5) are connected via a network (1) to a master computer, wherein the control arrangements (3) are coupled via additional connections (2, 11, 14) to the master computer (7) and via at least one connection (9, 10) to the servers (5), and wherein, if the network (1) fails, the data exchange between the control arrangements (3) and the master computer (7) can be established via the additional connection (2, 11, 14).

2. Switchgear cabinet monitoring system according to claim 1, characterised in that the additional connections (2, 11, 14) include a bus connection (2), an ISDN connection, a telephone line or serial data transmission lines.

3. Switchgear cabinet monitoring system according to claim 1 or 2, characterised in that the master computer (7) detects a failure of the network (1) by means of a recognition stage and issues a network failure signal via the additional connection (2, 11, 14) to the control arrangement (3), which communicates with the server (5) belonging to the pertinent network (1), and in that the server (5) can be reset or switched-off and switched-on again by means of the control arrangement (3) if the network failure signal is received via at least one connection (9, 10).

4. Switchgear cabinet monitoring system according to claim 3, characterised in that the connections (9, 10) include an optocoupler or a relay.

5. Switchgear cabinet monitoring system according to claim 3 or 4, characterised in that a reset scanner of the server (5) can be bridged in parallel by means of the connection (9).

6. Switchgear cabinet monitoring system according to claim 3 or 4, characterised in that the supply network access of the servers (5) is routed via the control arrangement (3) and can be switched-off and switched-on in said arrangement.

## Revendications

1. Installation de surveillance pour une armoire de distribution, où chaque armoire de distribution est pourvue d'au moins un dispositif de contrôle (3) pour des unités montées sur et/ou dans les armoires, et d'au moins un serveur (5), où chaque dispositif de contrôle (3) et chaque serveur (5) est relié par un réseau (1) à un ordinateur de commande, installation où les dispositifs de contrôle (3) sont reliés à l'ordinateur de commande (7) par des liaisons supplémentaires (2,11,14) et sont couplés aux serveurs (5) par au moins une connexion (9,10) et où, lors d'une défaillance du réseau (1), l'échange de données entre les dispositifs de contrôle (3) et l'ordinateur de commande (7) peut être rétabli par la liaison supplémentaire (2, 11, 14).

2. Installation de surveillance pour une armoire de distribution, suivant la revendication 1,
caractérisée
en ce que les liaisons supplémentaires (2, 11, 14) peuvent être constituées d'une liaison par bus (2), d'une liaison ISDN, d'une ligne téléphonique ou de lignes de transmission de données série.

3. Installation de surveillance pour une armoire de distribution, suivant l'une des revendications 1 ou 2,
caractérisée
en ce que l'ordinateur de commande (7) constate, au moyen d'un étage de détection, la défaillance du réseau (1) et, par la liaison supplémentaire (2, 11 ,14), envoie vers le dispositif de contrôle (3) qui est connecté aux serveurs (5) appartenant au réseau (1) concerné un signal de défaillance de réseau, et en ce que le serveur (5) peut, au moyen du dispositif de contrôle (3), lors de la réception du signal de défaillance de réseau, être remis à zéro ou éteint et réallumé via au moins une connexion (9, 10).

4. Installation de surveillance pour une armoire de distribution suivant la revendication 3,
caractérisée
en ce que les connexions (9,10) sont constituées d'un coupleur optique ou d'un relais.

5. Installation de surveillance pour une armoire de distribution suivant l'une des revendications 3 ou 4
caractérisée
en ce qu'un manipulateur de remise à zéro du serveur (5) peut, au moyen d'une connexion (9), être pontée en parallèle.

6. Installation de surveillance pour une armoire de distribution suivant l'une des revendications 3 ou 4,
caractérisée
en ce que le câble de connexion des serveurs (5) au réseau électrique est connecté au dispositif de contrôle (3) et que le courant peut être coupé et rétabli à l'intérieur de ce dispositif.
